# EUROPEAN PATENT APPLICATION

(11) **EP 2 187 567 A1**
(43) Date of publication of application: **19.05.2010**
(21) Application number: 08291084.5
(22) Date of filing: 18.11.2008
(51) Int. Cl.: H04L 12/24

(54) **Predictive method and system for optimizing demands of connectivity services**

(71) Applicant: Alcatel Lucent, 75008 Paris (FR)
(72) Inventor: Berde, Bela , Alcatel Lucent, 75008 Paris (FR); Chiosi, Agostino , Alcatel Lucent, 75008 Paris (FR); Verchere, Dominique , Alcatel Lucent, 75008 Paris (FR)
(74) Representative: Demulsant, Xavier

(57) **Abstract**

A method for connectivity services demands prediction within a provider network provided by a service management layer that accepts scheduled connectivity services demands (1), said method comprising:
- storing information of already requested network connectivity services demands in a database (10) ;
- predicting future connectivity services demands on the basis of the content of said database (10) ;
- optimizing the network resources according to the predicted connectivity services demands.

## Description

### FIELD OF THE INVENTION

This invention relates to network availability. Specifically, it relates to network service provisioning from network management functions or signaling from network control functions.

### BACKGROUND OF THE INVENTION

Network Service level agreements are often at the core of the business relationship between the provider and the customer of network services. Hence, fulfillment ensures that a service request may be carried out properly. Otherwise, this will eventually have negative impacts on the service.

Network service management is concerned with ensuring that requested services are running smoothly and functioning as intended within the constraints of the available resources. This involves performing required equipment configurations and serving all the queried resources such as bandwidth or ports.

For example, when a shared common infrastructure receives at the same time from many customers a plurality of services demands such as video-conferencing, VoIP, distance learning or other remote access to application servers, a number of operations needs to be carried out across the network so that all the requested services run as intended. Otherwise, later, one customer may call the service provider and complains that the service is not working properly. Problems could include, for example, poor voice quality, uncontinuous live video stream, unexpected connection interruption.

Networks may support a plurality of services with different priorities, requirements, occurrences in time and queries from heterogeneous data transmission technologies associating fixed, wireless and mobile terminals. This may result in a high fluctuation of the connectivity service demands which may degrade the availability of the network resources to serve these demands. Equally, high connectivity service demands may use the network resources inefficiently and, consequently, some of the requested demands may not be established i.e. provisioned, signaled or both. Therefore, the connectivity services demands provisioning, signaling and optimization within a network of limited resources are crucial for the good performance of the network.

Prominent existing approaches for connectivity service demands management are mainly policy-based techniques. Two principal methods can be distinguished.

Toward successfully meeting service level objectives, the first method is Network Control plane based functions (NCbF). It consists in identifying both the connectivity services demands and the network resources then interoperating efficiently so that connectivity service objectives can be met.

The second method is Network Management System based functions (NMS). NMS can spread over the heterogeneous network. It permits the interaction between networks elements located in different address spaces. It identifies devices and networks resources that the requested connectivity service will be mapped onto then it provisions them accordingly. Today the provisioning functions are mainly processed manually by the network operators.

Both conventional solution techniques, NCbF and NMS methods, require a system interface providing a continuously updated global view of available network resources and connectivity service demands. They need to operate in real-time under the network resources constraints and connectivity services objectives. However, due a lack of network status provision, even if sufficient network resources are allocated to each ingress/egress, an unexpected plurality of connectivity services demands can drastically reduce the available network resources and alter the network service performances.

Among these techniques, those accepting connectivity service demands with restricted scheduling capabilities are NMS based. As non limitative examples, one can mention any interface component for reception of network services demands (emission of established network services notifications) from (towards) an external application for network services management such as the service management application supported by Alcatel-Lucent 1359 ISN (available on request from Alcatel-Lucent). The scheduling may be done per type of resource or per type of service.

Scheduled connectivity service requests may be fulfilled thanks to the Service Management Layer (SML) interface within the telecommunications management network hierarchy. In fact, when the SML interface is in place, demands for scheduled of connectivity services become possible. However, this reveals additional requirements on the network infrastructure. Such basic requirements may include:
- an interface equipped with related protocol engines at the SML for submitting scheduled connectivity service demands to the network including connection quality of service and related performance parameter values ;
- processing of the individual demands at the SML in order to validate the connectivity service demands with the quality of service, performance requirement in the future and thus being able to satisfy the demands on the network management functions at a given date ;
- optimization of individual demands through aggregation and combination of services and deriving an aggregated configuration about required network connectivity services,
- linking the derived prevision to specific tools such scheduling tool or network planning tool ;
- acknowledgements of the request to client, i.e. whether the service demand is accepted or not by the SML. This may be very important in automated environments.

This preprocessing associated to the scheduling task creates further requirements which may complicate the network availability management and engender additional delay. Specifically, in a busy network where the network operator may see at the SML thousands of connectivity service demands, commonly used NMS based techniques are unable to fulfill the management of a plurality of fast dynamic network resources demands. Hence, this may compromise the jointly achievement of numerous connectivity service requests.

### OBJECTS AND ADVANTAGES

A first object of the present invention is a self-regulating and self-provisioning method and system that predict the network connectivity services demands.

A second object of the present invention is a predictive method and system using efficiently the network resources to meet the connectivity services demands.

A third object of the present invention is a predictive method and system ensuring that enough network resources are available to meet the connectivity services demands.

A fourth object of the present invention is to optimize available network resources in accordance with quality of service, network performance and additional constraints such as the time required for the connectivity services to become available that may be addressed by the network services users.

A fifth object of the present invention is a predictive method and system supplying any service management application with optimized network service information.

A sixth object of the present invention is to optimize network connectivity services in both time and network resources requirements dimensions.

A seventh object of the present invention is a method and a system that anticipate the network resource planning.

### SUMMARY OF THE INVENTION

The present invention relates to the prediction of network service demands in order to allocate dynamically and optimally network resources. For this purpose, the prediction system is using continuous observations of the whole connectivity services demands from the external application users and is using continuous monitoring of the network status to model the network status in time and network resource requirement dimensions.

A first aspect of the present invention relates to a method for connectivity services demands prediction within a provider network provided by a service management layer that accepts scheduled connectivity services demands, this method comprising:
- storing detailed information of already requested network connectivity services demands in a database ;
- predicting future connectivity services demands by performing a data mining on the content of said database ;
- optimizing the networks resources according to the predicted services demands.

Advantageously, the prediction step includes:
- sorting the said detailed information per connectivity service type and per next edge node ;
- calculating for each connectivity service type, the access probability per edge node ;
- selecting randomly one node among next nodes , weighted respectively with their access probabilities ;
- optimizing the networks resources related to the service demand.

Advantageously, the network connectivity service demands are optimized in both time and network resources requirements dimensions.

A second aspect of the present invention relates to an apparatus for connectivity services demands prediction within a provider network provided by a service management layer that accepts scheduled connectivity services demands, this apparatus comprising:
- service information collection system storing detailed information of already requested network connectivity services demands in a database ;
- service prediction system predicting future connectivity services demands on the basis of the content of the database ;
- means for optimizing the network resources according to the predicted services demands.

Advantageously, the algorithms used to estimate the prediction model parameters can be selected dynamically in accordance with the prediction accuracy requirements.

### DESCRIPTION OF THE DRAWING

The above and other objects and advantages of the invention will become more apparent from the following detailed description of preferred embodiments, considered in conjunction with the accompanying drawing and in which:
- Fig.1 is a schematic diagram illustrating a provider network in which the present invention is implemented. Like graphical representations refer to like parts throughout the drawing ;
- Fig.2 is a schematic diagram illustrating the network connectivity service demands prediction system.

### DETAILED DESCRIPTION OF THE PREFERRED EMBODIMENT

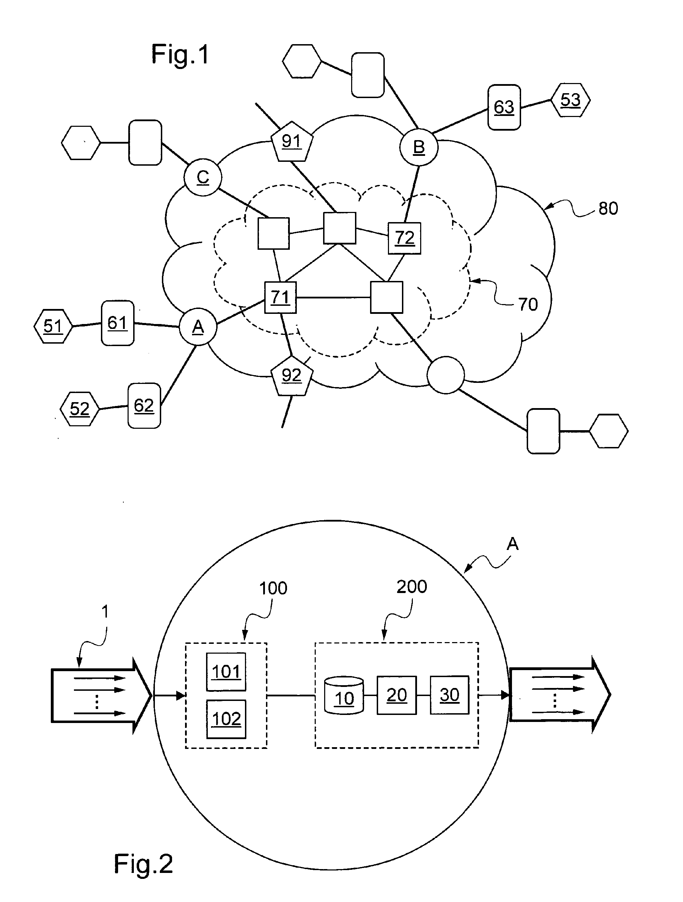

With reference to figure 1, there is shown a schematic representation of a provider network 80. A provider network 80 is comprised of:
- the transport network 70, also called the provider network core, that supports end to end networking by providing functionality 71 and 72 like routing, transmission, and protection ;
- the provider's edge nodes A, B and C ;
- the customer's edge nodes 61, 62 and 63 ;
- the inter-providers routers 91 and 90 connecting to other provider networks;
- customers networks 51, 52 and 53.

The provider edge nodes A, B, C receives connectivity service demands forwarded by customer's edge nodes 61, 62 and 63. These demands will enter the provider's core variously to go to other edge nodes C, B, A or to border routers connecting to other providers 91 and 92.

Referring now to figure 2, the provider's network edge node, such as A, involves a Network Management Layer (NML) 100 and a Service Management Layers (SML) 200. Any component for network connections of level 1 (SONET, SDH, PDH, G.709, WDM) management such as the Alcatel-lucent devices 1354 RM (available on request from Alcatel-Lucent), any component for network connections of level 2 (Ethernet, T-MPLS, MPLS, Frame Relay, ATM) management such as the Alcatel-Lucent devices 1354 BM (available on request from Alcatel-Lucent) are examples of components of the NML 100. The modules 101 and 102 refer, respectively, to the network control plane and the network management system. Any component for Virtual Private Network (VPN) services management from interfaces of level 1 and 2 such as the Alcatel-Lucent product 1355VPN (available on request from Alcatel-Lucent) or any other application manager such scheduling tools or network planning tools are examples of elements belonging to SML 200.

Thanks to the NML 100 and SML 200, the provider's edge node can look deeper into received connectivity service demands than does a typical router. In fact, the connectivity service requests formulated by customer's edge nodes through the NML 100 towards the network management system 102 (the control plane 101 respectively) from which a pool of resources are provisioned (signaled respectively) then scheduled and managed by the SML 200.

The SML contains:
- a Service Information Collection System (SICS) 10 that serves as a database to register within all information related to ongoing connectivity services ;
- a Service Prediction System (SPS) 20 that utilizes the information stored in the SICS 10 to model the connectivity services demands behavior in both the time and the network resources requirement dimensions ;
- at least a service management application 30. As a non limitative example, VPN (virtual private network) network manager, service scheduling system and network planning tools are service management applications.

The word "prediction" will be used to mean the act of prognosticating or estimating on the basis of a special knowledge. Accordingly, the service prediction system 20 permits to predict the connectivity services that will be requested by customers based on their previous requests.

The service prediction system 20 is under the control of the network operator and supports different service management applications 30.

The Service Prediction System 20 takes in charge a plurality of tasks, which include:
- analyzing a set of connectivity services demands 1;
- producing an updated and aggregated view on service demands with reference to the time constraints;
- proposing an optimized view, i.e. a specifically formatted structure, to a service management application or network planning tool about services;
- predicting the resource occupation visible to the connected service management application in the future;
- informing the network service user(s) if his/their requested connectivity service is satisfied or not.

A large number of observations of connectivity services demands 1 are stored in SICS 10. Based on these previously stored network services demands 1, the future network services demands can be predicted thanks to SPS 20.

Once the future connectivity services demands are predicted, automated services demands optimization means operate on the coming individual services demands 1 before forwarding any information to the service management application 30.

Given collected demands 1 in the SICS 10, SPS 20 provides predictive information concerning the use of network resources in the time dimension. The SPS 20 makes use of the previously requested connectivity services in order to predict the future ones.

Connectivity services prediction, provided by SPS 20, allows to ensure that enough resources in the network are available so that service level objectives will be met, which could involve reserving those resources. For example, when setting up a video connectivity service, enough bandwidth and network ports (i.e. capacity) must be available to carry the additional video traffic that will result when the connectivity service demands will be allocated on the networks.

Based on the already optimized demands, SPS 20 calculates for the active connectivity service demands, a bundled service structure to be handled by service management application 30.

The service prediction system 20 has its own locally updated database for storing requested connectivity services. The prevision may concern a subset of network resources allocated for a subset of the service management applications.

The service prediction system 20 predicts the connectivity services requests then supplies service management applications 30 with optimized connectivity services information in time and network resources dimensions. This permits to detect possible QoS degradation and then take on the fly corrective actions accordingly to sustain as much as possible the required QoS and avoid the collapse of the service.

The SPS 20 continuously updates its perception of the network status and cooperates efficiently in order to build a consistent knowledge on which connectivity service will be requested and which resources the latter will use.

The SPS 20 focuses on adaptiveness over the network resources through an optimization over the network resources requirements dimension with reference to connectivity service demands. Its main task is to automate the network configuration process and to allocate dynamically the network resources.

The service prediction system 20 analyses the connectivity service requests self-similarity in time and network resource requirement dimensions. For this purpose, SPS 20 contains predictive algorithms.

As a non-limitative example of prediction algorithms, SPS 20 utilizes the autoregressive model to describe the network status behavior. Different predefined algorithms can be selected or dynamically adjusted to estimate the model parameters. As non-limitative examples, linear and non-linear regression techniques can be used for the model parameters estimation. These algorithms, being of different sensitivity, accuracy, resolution and computational complexity are selected dynamically in function of the desired prediction accuracy and the available calculations resources. A non-linear regression technique to estimates the model parameter of the connectivity services demands is more accurate than using a linear regression technique. However, it requires more processing and consequently it can require more time to establish the connections by anticipation.

The autoregressive model order can be selected dynamically by the network provider.

The SPS 20 is configured in an adaptive way so as to minimize the prediction error by defining a multitude of algorithms with different accuracy levels and computational complexities.

In addition to the autoregressive approach for connectivity service demands prediction, hereinbefore cited, a probabilistic approach can be also used. In fact, the estimation of the establishment of a new connection can be achieved using two complementary functions defined as a conditional probabilistic function and a threshold function.

Given at least M recent observations with detailed information about accessed connectivity services through a given network edge node, the conditional probabilistic function estimates the next network edge, where M is predetermined number characterizing the amount of history used before starting the prediction.

The said detailed information about connectivity services comprises the requested connectivity service type, the connectivity service requester, the time of arrival of the connectivity service demand, the next network node to which is forwarded the connectivity service demand, the network node from which comes the connectivity service demand, the resources to be allocated for the connectivity service demand.

Detailed information connectivity services can be sorted, as non-limitative examples, by types of services, by identities of requesters, by resources requirements or by time duration of connection. Hence, the SPS 20 can optimize theses information along each sorted dimension. Specifically, the SPS 20 optimize the connectivity services demands in the time dimension and in resources requirements dimension.

The SPS 20 exploits the tracks of the connectivity service request's history passed across the edge node A and stored in the SICS10 in order to predict future connectivity services demands. When a requested service reaches an edge node of the provider network, the prediction module predicts the next edge node to which the request will be routed. Hence, the prediction results allow performing the required resources and equipment configurations in advance.

The prediction module allocates (N+1) counters for each edge node directly linked to N other edge nodes; one counter numbering the connectivity demands passed through the current edge node and N counters numbering the connectivity demands forwarded from the current edge node to the N first-order edge node neighbors. Two edge nodes are said directly linked, equally first-order neighbor, if it is possible that they communicate with each other without passing by an intermediate edge node.

At a given provide edge node and for a given type of connectivity service demand, the prediction system utilizes the forwarding frequency toward all the first order edge node neighbors in the most recent sliding time history window of a predetermined width so as to predict the future edge node.

More explicitly, given four provide edge nodes A, B, C and D such that A is directly connected to B, and C and connected to D through B. So, three counters; counter(A), counter(A-B), and counter (A-C), are assigned to the edge node A.

According to the probabilistic approach, if an edge node A receives a connectivity service demand, of a certain type, the service prediction system 20:
- update the counter(A) ;
- estimates the most likely future edge node ;
- forward the connectivity request in accordance with the prediction result ;
- wait for the connectivity demands until it is met ;
- retrieve the final destination of the requested connectivity service ;
- update all the counter(A-Xᵢ) values, where Xᵢ indicate all the provide edge directly connected to provide edge A.

A plurality of possibility can be adopted for updating counters values. One can use a generic function α() offering different option. As non-limitative examples, the counters values update may results from:
- a constant increment : α=1 ;
- a variable increment depending on the already established connectivity services within the history window. For example, if the window is defined according to a number W of the last connections established over the provider network, the counter value update is the function α() evolving between αₘᵢₙ and αₘₐₓ according to the connection index ω (ω=1, ..., W) ;
- a variable increment function of the series of the established connection history window. As an example, when the connectivity service is accessing the edge node A, counter(A) is increased by a constant α. And if the edge node B is accessed through a connection established from the edge node A, so counter(A-B) is increased by α (α > 0). In addition, if the previous connection established was between the edge node A and the edge node B, then counter(A) and counter(A-B) are both increased by α². Recursively, if the "n" previous connections established were between the provider edge node A and the provider edge node B, then counter(A) and counter(A-B) are both increased by αⁿ⁺¹. This method applies when a batch of connections to be established in a near future are between the same edge node pair ;
- a variable increment function of times of the connectivity service demands. The counter value update is α(t). For example, the counter function value to be added is more important in the morning or during the beginning of the week and is tiny during the other period times.

In the contrary to counter(A), which is updated as soon as the node A receives one connectivity service demand, counter(A-Xᵢ) are updated only after that the requested connection (serving the corresponding connectivity service demand) is established and activated i.e. used by the application.

The sliding time history window is an observing time interval of a predetermined width W of the ingress connectivity services demands through the edge node A. It contains the most recent connectivity services demands that the node A has received.

The prediction module utilizes the already served connectivity services in order to calculate the edge node access probabilities that determine which connections to establish in the near future. Known that the connectivity service demand is accessing an edge node A, the probability that it will be routed to an edge node X is the conditional probability P(Xᵢ|A) which is given by counter(A-X)/counter(A).

The most likely next edge node is randomly selected among edge node neighbor of first order, weighted respectively with their accessing frequency in sliding time history window per connectivity service demand. As an illustrative example, suppose that:
- an edge node X has only three edge node neighbors of first-order, respectively, Y1, Y2 and Y3 ;
- in the most recent time history window, counter(X)=100, counter(X-Y1)=80, counter(X-Y2)=15 and counter(X-Y3)=5 ;
then, when the edge node X receives a connectivity service demand, the next edge node is randomly selected among Y1 with a probability of 0.8, Y2 with a probability of 0.15 and Y3 with a probability of 0.05. Another embodiment for next edge node selection is to retain the edge node neighbor having the highest access probability (i.e. Y1.).

The threshold function determines a threshold value for each related connectivity service that can be established over the network infrastructure. The access probability is compared with the threshold value to trigger or not the establishment of the related connection.

The connectivity service type may be, as non-limitative examples, VPN, VoIP, distance learning, or other remote access to application servers, high performance computing, and storage operations.

In the case of a wrong prediction, the counters (A-Xᵢ) are not updated and it enables tuning the prediction counters only with established connections predicted successfully.

The frequency of the network status prediction affects the prediction performances. The higher it is, the more accurate are the prediction results.

Historical network status information concerns previously estimated network status over a given time period T and with a periodicity δt.

Historical network status information which is used in the prediction process influences the prediction accuracy. Hence, the width of the time history window W can be defined in accordance with the desired prediction accuracy. Optionally the time history window W can be modified dynamically by the prediction function.

The service prediction system 20 contains algorithms for network service demand optimization that operate on the stored service demands in 10 in a recurrent way. An example of optimization is given by grouping the collected connectivity service demands in the time dimension with reference to the ingress and egress points.

The predicted network status is defined as the difference between the current overall network status (including known and unknown connectivity service requests) and the network status which is known by the network management system 102.

Storing the network service status in the SICS 10 reveals valuable information for network operators and clients. For example, the exploration of the content of SICS 10 may be able to determine how the connectivity services demands varies over the time of day or the day of the week. They might also observe of network resources utilization trends. This helps network operators to operate the network resources and eliminate network vulnerabilities and plan for how to evolve and upgrade the network resources.

## Claims

1. Method for connectivity services demands prediction within a provider network provided by a service management layer that accepts scheduled connectivity services demands (1), said method comprising:
- storing information of already requested network connectivity services demands in a database (10) ;
- predicting future connectivity services demands on the basis of the content of said database (10) ;
- optimizing the network resources according to the predicted connectivity services demands.

2. Method according to claim 1, wherein the information storing step concerns already accessed connectivity services demands within a sliding time history window through a network edge node (A).

3. Method according to claims 1, wherein the prediction step uses an auto-regressive approach to describe the connectivity services demands within the provider network.

4. Method according to claims 1, wherein the prediction step uses a probabilistic approach to predict the connectivity services demands.

5. Method according to claim 1 or 4, wherein the prediction step within an edge node (A) of the provider network (80) includes :
- sorting the said detailed information per connectivity service type and per next edge node (B,C);
- calculating for each connectivity service type, the access probability per next node (B,C) ;
- selecting randomly one node among next nodes (B,C), weighted respectively with their access probabilities ;
- optimizing the network resources related to the service demand.

6. Method according to any of claims 1 to 5, wherein the prediction step utilizes algorithms that are selected dynamically in accordance with the prediction accuracy requirements.

7. Method according to claim 5, wherein the access probability of a next network edge node Y from a current network edge node X includes two counters :
- counter(X) numbering the connectivity demands accessed through the current edge node X ;
- counter(X-Y) numbering the connectivity demands routed from X to Y.

8. Method according to claim 7, wherein counter(X) is updated as soon as the network edge node X receives the connectivity service demand and counter(X-Y) is updated only after that the requested connectivity service is met.

9. Method according to any of claims 5 to 8, wherein the access probability of a next network edge node Y from a current network edge node X is a conditional probability P(Y|X) = counter(X-Y)/counter(X).

10. Apparatus for connectivity services demands prediction within a provider network provided by a service management layer that accepts scheduled connectivity services demands (1), said apparatus comprising:
- service information collection system storing detailed information of already requested network connectivity services demands in a database (10);
- service prediction system (20) predicting future connectivity services demands on the basis of the content of the database ;
- means for optimizing the network resources according to the predicted services demands.

11. Apparatus according to claim 10, comprising means for storing the detailed information of the already accessed connectivity services demands for further exploration.

12. Apparatus according to claims 10 or 11, wherein the service prediction system (20) uses an auto-regressive approach to describe the connectivity services demands within the provider network.

13. Apparatus according to any of claims 10 to 12, wherein the service prediction system (20) uses a probabilistic approach to predict the connectivity services demands.

14. Apparatus according to claim 10 or 13, wherein the service prediction system within an edge node (A) of the provider network (80) includes :
- means for sorting the said detailed information per connectivity service type and per next edge node (B,C);
- means for calculating for each connectivity service type, the access probability per next node (B,C) ;
- means for selecting randomly one node among next nodes (B,C), weighted respectively with their access probabilities ;
- means for optimizing the networks resources related to the service demand.

15. Apparatus according to any of claim 10 to 14, wherein the service prediction system (10) utilizes algorithms that are selected dynamically in accordance with the prediction accuracy requirements.

16. Apparatus according to claim 10, wherein the service management layer comprise the service prediction system (20) for connectivity services demands optimization in both time and network resources requirements dimensions per type of connectivity service.

## Amended claims

### Amended claims in accordance with Rule 137(2) EPC.

**1.** Method for connectivity services demands prediction within a provider network provided by a service management layer that accepts scheduled connectivity services demands (1), said method comprising:
- storing information of already requested network connectivity services demands in a database (10) ;
- predicting future connectivity services demands on the basis of the content of said database (10) ;
- optimizing the network resources according to the predicted connectivity services demands,
said prediction step including:
- sorting the said information per connectivity service type and per next edge node (B,C);
- calculating for each connectivity service type, the access probability per next node (B,C);
- selecting randomly, per connectivity service type, one node among next nodes (B,C), weighted respectively with their access probabilities ;
- optimizing the network resources related to the connectivity service type.

**2.** Method according to claim 1, wherein the information storing step concerns already accessed connectivity services demands within a sliding time history window through a network edge node (A).

**3.** Method according to claims 1, wherein the prediction step further uses an auto-regressive approach to describe the connectivity services demands within the provider network.

**4.** Method according to any of claims 1 to 3, wherein the prediction step utilizes algorithms that are selected dynamically in accordance with the prediction accuracy requirements.

**5.** Method according to claim 1, wherein the access probability of a next network edge node Y from a current network edge node X includes two counters :
- counter(X) numbering the connectivity demands accessed through the current edge node X ;
- counter(X-Y) numbering the connectivity demands routed from X to Y.

**6.** Method according to claim 5, wherein counter(X) is updated as soon as the network edge node X receives the connectivity service demand and counter(X-Y) is updated only after that the requested connectivity service is met.

**7.** Method according to any of claims 4 to 6, wherein the access probability of a next network edge node Y from a current network edge node X is a conditional probability P(Y|X) = counter(X-Y)/counter(X).

**8.** Apparatus for connectivity services demands prediction within a provider network provided by a service management layer that accepts scheduled connectivity services demands (1), said apparatus comprising:
- service information collection system storing detailed information of already requested network connectivity services demands in a database (10);
- service prediction system (20) predicting future connectivity services demands on the basis of the content of the database ;
- means for optimizing the network resources according to the predicted services demands
said service prediction system (20) including:
- means for sorting the said information per connectivity service type and per next edge node (B,C);
- means for calculating for each connectivity service type, the access probability per next node (B,C) ;
- means for selecting randomly, per connectivity service type, one node among next nodes (B,C), weighted respectively with their access probabilities ;
- means for optimizing the networks resources related to the connectivity service type.

**9.** Apparatus according to claim 8, comprising means for storing the detailed information of the already accessed connectivity services demands for further exploration.

**10.** Apparatus according to claims 8 or 9, wherein the service prediction system (20) further uses an auto-regressive approach to describe the connectivity services demands within the provider network.

**11.** Apparatus according to any of claim 8 to 10, wherein the service prediction system (10) utilizes algorithms that are selected dynamically in accordance with the prediction accuracy requirements.

**12.** Apparatus according to claim 8, wherein the service management layer comprise the service prediction system (20) for connectivity services demands optimization in both time and network resources requirements dimensions per type of connectivity service.
